# EUROPEAN PATENT SPECIFICATION

(11) **EP 0 301 506 B1**
(45) Date of publication and mention of the grant of the patent: **30.03.1994**
(21) Application number: 88112133.9
(22) Date of filing: 27.07.1988
(51) Int. Cl.: H04N 1/04, H04N 1/46, G03G 15/00

(54) **Calibrating an image scanning and reading apparatus**
Eichen eines Gerätes zum Abtasten und Aufnehmen von Bildern
Calibrage d'un appareil de balayage et de lecture d'images

(30) Priority: 30.07.1987 JP 190973/87
(43) Date of publication of application: 01.02.1989
(73) Proprietor: Dainippon Screen Mfg. Co., Ltd., Kamikyo-ku Kyoto 602 (JP)
(72) Inventor: Taniguchi, Yoshihiro c/o Dainippon Screen Mfg. Co., Horikawa-dori Kamikyo-ku Kyoto 602 (JP); Hashimoto, Hideaki c/o Dainippon Screen Mfg. Co., Horikawa-dori Kamikyo-ku Kyoto 602 (JP)
(74) Representative: Goddar, Heinz J., Dr.

(56) References cited:
- EP-A- 0 061 681
- DE-B- 1 512 179
- DE-C- 2 508 734
- GB-A- 2 067 043
- GB-A- 2 144 293
- PATENT ABSTRACTS OF JAPAN vol. 5, no. 5 (P-44)(677), 14 January 1981; & JP - A - 55 137 530 (DAINIPPON SCREEN SEIZOU) 27.10.1980

## Description

THIS INVENTION relates to a method and apparatus for calibrating an image scanning reading apparatus such as a reproduction colour scanner and more specifically to a method and apparatus for calibrating the reading apparatus when a plurality of originals are to be read in succession.

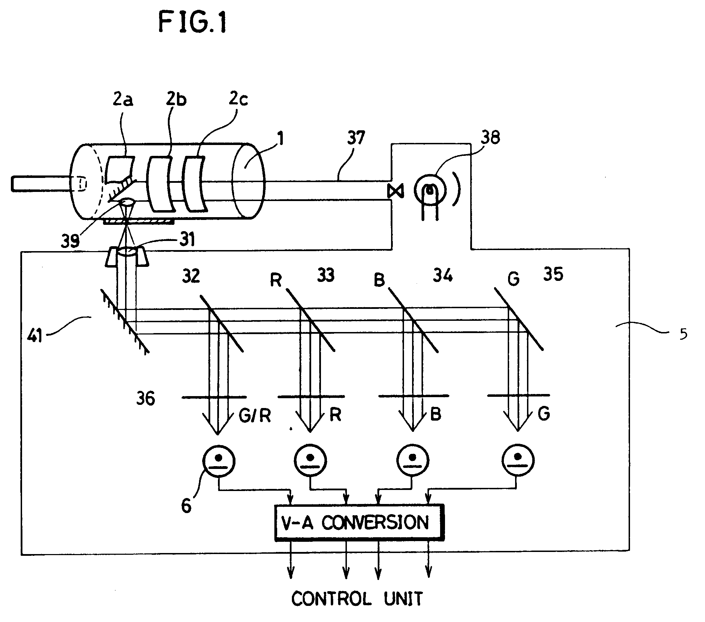

Figure 1 of the accompanying drawings is a schematic diagram of a colour scanner which represents an example of a conventional image reading apparatus. Referring to Figure 1, a conventional colour scanner comprises a transparent rotary drum 1 for supporting thereon a transparent original 2 to be read, an illuminating means 37 including a transmission illuminating system for illuminating the original 2 from within the rotary drum, and a scanning head 40 for receiving light transmitted through the original 2 to convert the same into an electrical image signal.

The illuminating means 37 includes a halogen lamp and a condenser lens 39 for condensing the light beam for the lamp 38. The scanning head 45 comprises a pickup lens 31 for receiving the transmitted light from the image 2, a colour separation system 41 for separating the light received by the pickup lens into different colours, and photosensitive devices 6 each for receiving light of a respective colour and converting the same into electrical current. The colour separation system 41 comprises a half mirror 32, colour-separating dichroic mirrors 33 and 34, a total reflection mirror 35 and filters 36. The dichroic mirror 33 detects red, the dichroic mirror 34 detects blue and the total reflection mirror 35 detects green light.

The above description applies to a transparent original 2. If the original 2 is not transparent, an illuminating means including a reflective illuminating system is employed.

The operation of the known colour scanner in reading an original will now be described. The original 2 is mounted on the surface of the rotary drum 1. A portion of the original 2 is designated as a reference portion. The reference portion is a highlight portion of the original. Namely, in the case of a transparent original, a completely transparent portion will be selected as the reference portion and, in case of a reflection original, a white portion will be selected as the reference portion (the reference portion will be hereinafter referred to as a calibration reference portion). The outputs from the various photosensitive devices should be the same when light is received from the calibration reference portion. However, in the above described optical system for effecting colour separation, each of the dichroic mirrors 33 and 34, the colour filters 36, the photosensitive device 6 (photomultiplier tubes or the like) have respective independent spectral characteristics. Therefore, light from the above described calibration reference portion does not provide the same output for each colour.

Therefore, in order to obtain the same output signal for each colour, white balance calibration (hereinafter referred to as calibration) is carried out by setting the sensitivity of each photosensitive device beforehand.

In the case of a transparent original, a transparent portion near the image is employed as the calibration reference portion and in the case of a reflection original, a white portion near the image is employed as the calibration reference portion, in order to avoid any influence of flaws or unevenness of transmission through a colourless transparent film employed to attach the original onto the rotary drum, or the influence of variations in the transparency of the rotary drum.

Recently, attempts have been made to automate various operations of the image scanning and reading apparatus. For example, a plurality of originals may be read in succession. However, when a plurality of originals are set on the drum of the colour scanner, an exact output signal cannot be obtained if only a single calibration reference portion near one of the originals is employed. The reason for this is that the sensitivity of the optical system at the different original positions fluctuates due to the above described unevenness of transmission and the like. Therefore, a respective reference portion needs to be used for each original to effect satisfactory calibration. However, if the white balance calibration of the photosensitive portion is carried out by stopping the drum for each original as in the prior art, the operational efficiency of the apparatus becomes extremely low.

When the magnification has to be set at a desired value in colour separation, reading apertures provided at the photosensitive devices are automatically exchanged or switched in order to provide proper pixel dimensions. The light intensity at the photosensitive devices changes in consequence of the exchange of the aperture, so that re-calibration needs to be carried out. However, if the drum has to be stopped every time, the operational efficiency of the apparatus is again reduced.

Each photosensitive device for converting the separated colour into an electric image signal has a sensitivity characteristic and a frequency characteristic. As is well known, the latter characteristic is associated with the responsiveness of the device to a changing signal. Therefore, normally, the signal level at the calibration reference portion picked up with the rotary drum stopped differs slightly from the signal level picked up with the drum actually rotating. Thus, if the calibration is carried out with the drum stopped, this difference needs to be compensated for.

An object of the present invention is to provide an image reading apparatus which is able to be automated.

Another object of the present invention is to provide an image reading apparatus capable of improved operational efficiency.

A further object of the present invention is to provide an image reading apparatus capable of providing accurate colour separation signals.

According to the invention there is provided an image scanning and reading apparatus as defined by Claim 1.

Information on the calibration reference portions and the like is input to the memory prior to the scanning of images, and the scanning head reads the image based on the data. Therefore, in contrast to the prior art, the scanning head need not be stopped during reading of a succession of images. Consequently, an image scanning input device can be provided which can be automated and whose operation efficiency can be improved.

In another aspect, the invention provides a method of calibrating an image scanning reading apparatus in which a plurality of originals supported by an originals holder are scanned and read by a scanning head, comprising the steps of: storing the position of each of a plurality of calibration reference portions supported by the originals holder and each serving as a reference in reading a corresponding original; starting the scanning; detecting the position of the scanning head; comparing the detected position of the scanning head and the stored positions of the calibration reference portions; upon detection of a coincidence between the position of the scanning head and the stored position of a calibration reference portion, detecting a reading signal from the calibration reference portion; calibrating the scanning head in dependence on the reading signal obtained from the calibration reference portion; and reading the corresponding original by the thus calibrated scanning head.

The light intensity signals from the calibration reference portions are thus detected during scanning of the scanning head. Therefore, the reference signals are detected in the actual reading state, enabling more practical calibration. Consequently, precise colour separation can be carried out.

In order that the invention may be more readily understood, embodiments thereof will now be described by way of example, with reference to the accompanying drawings, in which:
Figure 1 is a schematic diagram showing the structure of a colour scanner representing an example of a conventional image reading apparatus;
Figure 2 is a block diagram showing the structure of an image reading apparatus embodying the present invention;
Figure 3 is a flow chart showing the operation of the image reading apparatus embodying the present invention; and
Figure 4 is a diagram of waveforms of various signals before and after calibration of the apparatus.

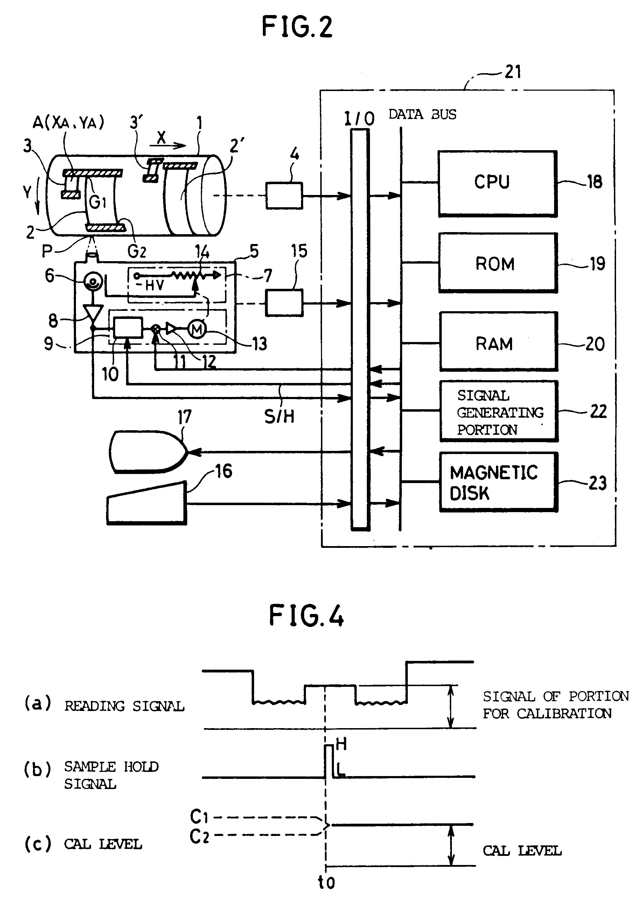

Referring firstly to Figure 2 which is a block diagram of the structure of an image scanning and reading apparatus embodying the present invention, a description will be given of the application of the present invention to the colour scanner shown in Figure 1. Since the overall structure of the colour scanner itself is the same as that of Figure 1, the same portions are denoted by the same numerals and the description thereof will be omitted.

The rotary drum 1 is rotatable at constant speed by a driving apparatus (not shown) and the instantaneous angle of rotation of the drum is detected by a rotary encoder 4. One or a plurality of originals 2 are directly applied to the rotary drum 1 or applied underneath a transparent flexible resin film wound on the drum. Figure 2 shows two originals 2, 2′ mounted on the drum. Calibration reference portions 3 and 3′ are mounted on the drum near the originals 2 and 2′. In the case of a transparent original 2, 2′, the reference portion 3, 3′ is transparent. In the case of a reflection original 2, 2′ the reference portion 3, 3′ is a white region. The leading and trailing edges of the reference portions 3 and 3′ in the rotary direction (main scanning direction = Y direction in the figure) may be covered by strips of light intercepting tape (the hatched portions in the figure) in order to facilitate visual monitoring.

A linear scale 15 which operates in association with the head 5 is provided on a scanning head 5 which is movable in the axial direction of the rotary drum 1. The position of the scanning head 5 in the axial direction (subscanning direction = X direction in the figure) of the rotary drum 1 is detected by the linear scale 15. As shown in Figure 1, the scanning head 5 comprises an original illuminating apparatus and photosensitive means for colour separation. The photosensitive means comprise a spectral optical system for separating the light received through the picked lens into three primary colours and a plurality of electrical converter circuits for independently converting the separated light signals into electrical red (R, green (G), blue (B) and unsharp (U) signals. The converter circuits are similar and only one of the circuits is shown in Figure 2.

Each of the converter circuits comprises a photomultiplier tube 6 which converts the light incident thereon into an electrical signal, a driving means 7 for driving the tube 6, an amplifier 8 for amplifying the output signal of the photomultiplier tube 6, and a sensitivity setting means 9 for adjusting and setting the sensitivity of the photomultiplier tube 6. The sensitivity setting means 9 comprises a sample and hold circuit 10 for sampling and holding the output from the amplifier 8 in response to a signal from an arithmetic unit 21, a gate circuit 11 for transmitting the held output sample to the amplifier 12, and a motor 13 which is driven by the amplifier 12. The driving means 7 comprises a variable resistor 14 with the slider thereof driven by the motor 13, and an internal high voltage (represented by -HV) is divided by the variable resistor 14 to determine the voltage applied to the photomultipler tube 6.

A control board 16 and a display 17 are connected to the unit 21 to enable an operator to input instructions and to enable the operation of the apparatus to be checked visually. The arithmetic unit 21 of the present apparatus comprises a ROM 19 for storing the program to operate the apparatus, a RAM 20 for temporary storage and a CPU 18.

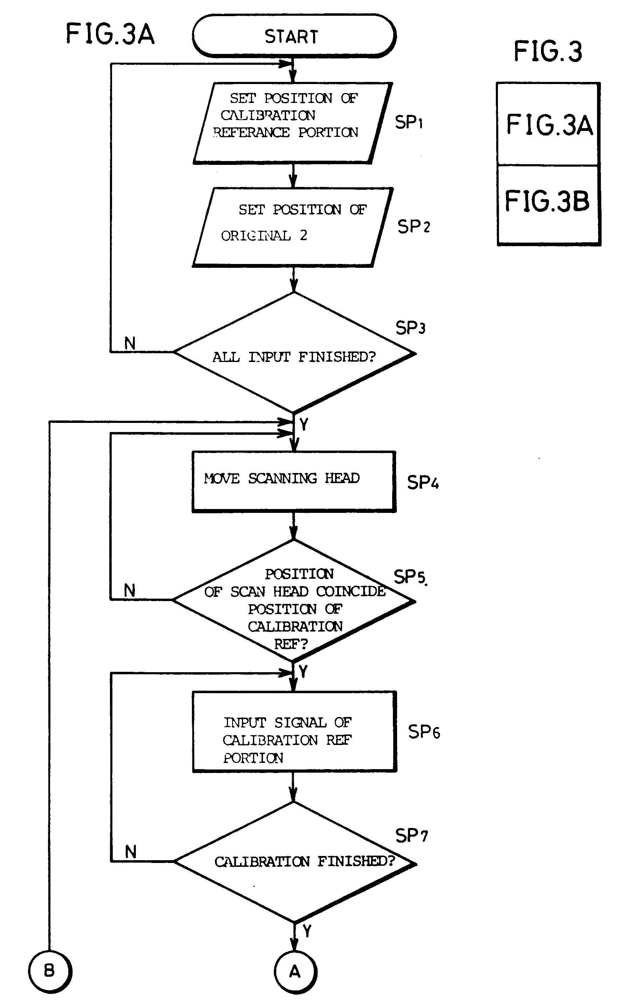

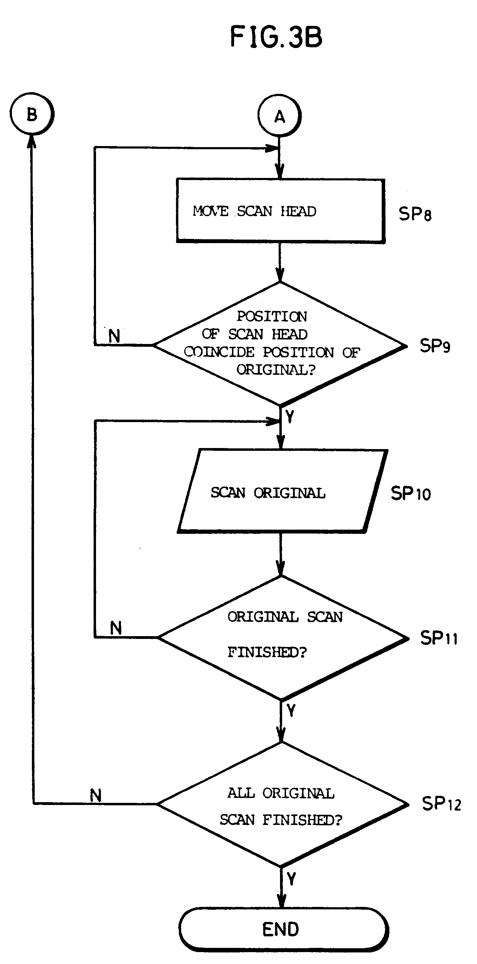

The operation of the apparatus of Figure 2 will be described with reference to the flow chart of Figure 3.

First, prior to the reading of the original, the position of calibration reference portion 3 is set in the following manner. The rotary drum 1 and the scanning head 5 are driven or manually operated, whereby the reading position P of the scanning head 5 is positioned at a point A in the reference portion 3. An instruction to log the position is input using the input means 16. The CPU 18 counts the outputs from the rotary encoder 4 and from the linear scale 15 during displacement of the drum and scanning head, and the counted values are stored in the RAM 20 as the co-ordinates (X_{A}, Y_{A}) of the point A in the calibration reference portion 3 on the rotary drum 1 in responsive to the said instruction (SP1). In the same way, the co-ordinates (X_{G1}, Y_{G1}) and X_{G2}, Y_{G2}) of two and points G₁ and G₂ of the original 2 are stored in the memory (SP2). The respective positions of the calibration reference portion 3′ and of the corresponding original 2′ are stored in the RAM 20 in the same manner.

When the position information of the respective originals and the corresponding reference portions has all been input (SP3), the apparatus starts its scanning operation (SP4). Thus, the rotary drum 1 is rotated at a constant speed, and the scanning head 5 is driven in the X direction. At the same time, the position output of the linear scale 15 and the position X_{A} in the X direction of the point A stored in the RAM 20 are compared with each other. When they coincide with each other (SP5), it is determined that the scanning head 5 has reached a position opposite the position X_{A} in the X direction of the point A, and the calibration operation is carried out at this position (SP6). The scanning head 5 is stopped until the calibration is finished (SP7), while the rotary drum 1 is still rotated.

Figure 4 shows the waveforms of the signals before and after this time t_{O}, in which (a) represents the output from the amplifier 8 which constitutes a reading signal, (b) denotes a sample and hold signal output from a signal generating portion 22 of the unit 21 in response to an instruction from the CPU 18 based on the data written in the RAM 20 at the time t_{O}, which signal is transmitted to the sample and hold circuit 10 by the line S/H in Figure 2 and (c) shows the output of the amplifier 8 which is held as a sample by the sample and hold circuit 10 as a result. The signal level which was held as a sample the last time is normally different from the CAL level of this time as shown by C₁ and C₂, for respective calibrating positions as described above. The calibration instruction signal output from the CPU 18 is transmitted to the gate circuit 11.

In this manner, the sample and hold circuit 10 samples the signal level of the reference portion 3 output from the photomultiplier tube 6 as long as the sample and hold signal is "H", and then holds the sampled light intensity value when the signal becomes "L", as shown in Figure 4(c). When the output signal of the sample and hold circuit 10 is applied to the motor 13 through the gate circuit 11, the slider of the variable resistor 14 is driven to adjust the sensitivity of the photomultiplier tube 6, so that the output level of the respective photomultiplier tube 6 when upon detection of the reference portion 3 is adjusted to a prescribed value. The prescribed value is a value which enables proper light conversion by the photosensitive means for respective colours and enables setting of the sensitivity of the photosensitive means of respective colours at the same value. "Proper conversion" means that the light intensity and the output electrical signals are in proportion to each other, for example. The prescribed value usually has a margin, and is appropriately set in the range.

When the calibration of the photosensitive portions is finished in this manner (SP7), the sensitivity setting portion 9 remains as it is and the scanning head 5 is again driven along the X axis (SP8). When the scanning head reaches the position of the original (SP10), the original 2 is scanned in the calibrated state to carry out the reading of the original (SP10).

Once the reading of the original 2 is finished (SP11), the next original 2′ is read after the recalibration of the photosensitive devices is automatically carried out using the reference portion 3′ corresponding to the original 2′. Originals 2, 2′ are thus successively read with respective calibrations operations being carried out whilst the rotary drum 1 is continuously rotated (SP12).

The apparatus described baove employs a rotary drum. The present invention may, however, also be applied to a scanning reading apparatus of planar type which has become popular recently. In the planar type apparatus, originals are applied to an originals holder comprising a transparent glass upper frame and a lower plate, with calibration reference portions applied in the vicinity of respective originals.

In the above described embodiment of Figure 2, the calibration is carried out by adjusting the sensitivity of the photomultiplier tube. A solid state image sensing device such as a CCD may however be employed as the photosensitive means, in which case calibration may be carried out by electrical processing such as control of the rate of amplification of the circuit amplifying the output signal of the CCD, instead of the motorised control employed in the Figure 2 embodiment.

In the above described embodiment, the position information in the subscanning direction is obtained by a linear scale provided in association with the scanning head 5. If the drum is driven by a precision screw, the position information in the subscanning direction may be obtained by accumulating the detected number of rotations of the rotary drum 1.

Although the position information for the calibration reference portions and of the originals is input with the scanning head aligned with the position in question in the described embodiment, this information may be input via the input means 16 when the respective positions are set and known in advance.

In addition, if the calibration reference portion has a predetermined area and is defined by two points in the X direction as in the case of the original, the scanning head need be stopped during calibration, the calibration being carried out between the two points.

In the above described embodiment, the present invention is applied to an apparatus for scanning a colour original. The present invention may, however, be applied to an apparatus for scanning monochrome originals. In that case, the calibration is carried out such that the photosensitive means has a proper photoelectric conversion characteristic, as described in association with the prescribed value in the foregoing.

An image scanning reading apparatus embodying the present invention may equally be applied to an apparatus which is directly connected to a recording apparatus for simultaneously carrying out reading and reproduction of the original or to an apparatus in which the read image signals are temporarily stored on a medium such as a magnetic disc 23.

The present invention thus enables the calibration of the photosensitive means to be carried out while an originals holder is being driven. Compared with the prior art, in which calibration is carried out with the originals holder stopped, the present invention therefore facilitates the automatic operation of the apparatus. The operation of efficiency of the apparatus can thereby be improved.

Since the calibration of the photosensitive means is carried out with the originals holder being driven, the calibration is carried out under the same conditions as the colour separation of the original. Therefore, compared with calibration which is carried out with the originals holder stopped, more practical calibration of the electrical circuits can be carried out, whereby precise colour separation can be achieved.

The features disclosed in the foregoing description in the following claims and/or in the accompanying drawings may be material for realising the invention in diverse forms thereof.

## Claims

1. An image scanning and reading apparatus comprising
an original holder (1) for supporting a plurality of originals (2,2') and calibration reference portions (3,3') which correspond to respective originals and serve as references in reading the corresponding originals;
a scanning head (5) for optically scanning the original holder to read the originals and the calibration reference portions;
illuminating means for illuminating the originals and the calibration reference portions; and
photosensitive means (6) for receiving light intensity signals from the originals and from the calibration reference portions;
scanning head position detecting means (4,15) for detecting the position of the scanning head;
storage means (20) for storing the positions of the calibration reference portions;
calibrating means (7,9) for calibrating the scanning head for reading an original in dependence upon the reading signal obtained from the respective calibration reference portion and comprising
means for calibrating the photosensitive means (6) in dependence upon the light intensity signal received from the calibration reference portion; and
means for comparing (18) the detected position of the scanning head and the stored positions of the calibration reference portions and actuating the calibrating means upon a coincidence between the detected and stored positions.

2. Apparatus according to claim 1, wherein the photosensitive means comprises a photomultiplier tube.

3. Apparatus according to claim 2, wherein the photomultiplier tube generates an output voltage corresponding to the light intensity signal, and the calibrating means adjusts the level of the output voltage.

4. Apparatus according to claim 1, wherein the photosensitive means comprises a CCD.

5. Apparatus according to claim 1, 2 or 3, wherein the original is transparent and the illuminating means illuminates the original with transmitted light.

6. Apparatus according to claim 1, 2 or 3, wherein the original does not transmit light, and the illuminating means illuminates the original to obtain light reflected therefrom.

7. Apparatus according to any preceding claim, wherein the originals holder is cylindrical.

8. Apparatus according to any preceding claim, wherein the scanning head position detecting means comprises a linear encoder.

9. A method of calibrating an image scanning reading apparatus in which a supported original is scanned and read,
in which
a plurality of originals can automatically be read in succession by:
storing the positions of each of a plurality of calibration reference portions supported by an originals holder, whereby each serves as a reference in reading a corresponding original;
starting the scanning;
detecting the position of the scanning head;
comparing the detected position of the scanning head and the stored positions of the calibration reference portions;
upon detection of a coincidence between the position of the scanning head and a stored position of the calibration reference portion, detecting a light intensity signal from the calibration reference portion;
calibrating the scanning head in dependence on said light intensity of the signal obtained from the calibration reference portion, which comprises
calibrating the photosensitive means located in said scanning head in dependence upon said light intensity signal; and
reading the corresponding original by the calibrated scanning head.

## Patentansprüche

1. Vorrichtung zum Abtasten und Einlesen von Bildern umfassend einen Originalträger (1) zum Tragen einer Vielzahl von Originalen (2, 2') und von Eichreferenzbereichen (3, 3'), die den jeweiligen Originalen zugeordnet sind und als Referenzen beim Lesen der entsprechenden Originale dienen;
einen Abtastkopf (5) zum optischen Abtasten des Originalträgers, um die Originale und die Eichreferenzbereiche abzulesen;
ein Beleuchtungsmittel zum Beleuchten der Originale und der Eichreferenzbereiche;
ein lichtempfindliches Mittel (6) zum Aufnehmen von Lichtintensitätssignalen von den Originalen und den Eichreferenzbereichen;
ein Abtastkopfpositionserfassungsmittel (4, 15) zum Erfassen der Position des Abtastkopfes;
ein Speichermittel (20) zum Speichern der Positionen der Eichreferenzbereiche;
ein Eichmittel (7, 9) zum Eichen des Abtastkopfes zum Lesen eines Originals in Abhängigkeit von dem von dem entsprechenden Eichreferenzbereich erhaltenen Lesesignal, das ein Mittel zum Eichen des lichtempfindlichen Mittels (6) in Abhängigkeit von dem von dem Eichreferenzbereich empfangenen Lichtintensitätssignal umfaßt; und
ein Mittel (18) zum Vergleichen der erfaßten Position des Abtastkopfes und der gespeicherten Positionen der Eichreferenzbereiche und zum Aktivieren des Eichmittels, wenn eine Koinzidenz zwischen der erfaßten Position und den gespeicherten Positionen auftritt.

2. Vorrichtung nach Anspruch 1, dadurch gekennzeichnet, daß das lichtempfindliche Mittel eine Fotozelle umfaßt.

3. Vorrichtung nach Anspruch 2, dadurch gekennzeichnet, daß die Fotozelle eine Ausgangsspannung erzeugt, die dem Lichtintensitätssignal entspricht, und daß das Eichmittel den Pegel der Ausgangsspannung einstellt.

4. Vorrichtung nach Anspruch 1, dadurch gekennzeichnet, daß das lichtempfindliche Mittel ein CCD umfaßt.

5. Vorrichtung nach Anspruch 1, 2 oder 3, dadurch gekennzeichnet, daß das Original transparent ist und daß das Beleuchtungsmittel das Original beleuchtet, wobei transmittiertes Licht verwendet wird.

6. Vorrichtung nach Anspruch 1, 2 oder 3, dadurch gekennzeichnet, daß das Original nicht lichtdurchlässig ist und daß das Beleuchtungsmittel das Original beleuchtet, um von demselben reflektiertes Licht zu erhalten.

7. Vorrichtung nach irgendeinem der vorangegangenen Ansprüche, dadurch gekennzeichnet, daß der Originalträger zylindrisch ist.

8. Vorrichtung nach irgendeinem der vorangegangenen Ansprüche, dadurch gekennzeichnet, daß das Abtastkopfpositionserfassungsmittel einen linearen Kodierer umfaßt.

9. Verfahren zum Eichen einer Vorrichtung zum Abtasten und Einlesen von Bildern, bei welchem ein getragenes Original abgetastet und eingelesen wird und eine Vielzahl von Originalen automatisch eingelesen werden können durch:
Speichern der Positionen aller Eichreferenzbereiche einer Vielzahl von Eichreferenzbereichen, die auf einem Originalträger getragen werden, wobei jeder Eichreferenzbereich als eine Referenz beim Lesen eines entsprechenden Originals dient;
Beginnen des Abtastens;
Erfassen der Position des Abtastkopfes;
Vergleichen der erfaßten Position des Abtastkopfes mit den gespeicherten Positionen der Eichreferenzbereiche;
Erfassen eines Lichtintensitätssignals von einem Eichreferenzbereich, wenn eine Koinzidenz zwischen der Position des Abtastkopfes und der gespeicherten Position des Eichreferenzbereichs erfaßt worden ist;
Eichen des Abtastkopfes in Abhängigkeit von besagter Lichtintensität des Signals, das von dem Eichreferenzbereich erhalten wird, was das Eichen des lichtempfindlichen Mittels, das in besagtem Abtastkopf angeordnet ist, in Abhängigkeit von besagtem Lichtintensitätssignal umfaßt; und
Einlesen des entsprechenden Originals durch den geeichten Abtastkopf.

## Revendications

1. Appareil d'analyse et de lecture d'image comprenant :
un support d'originaux (1) destiné à supporter une pluralité d'originaux (2, 2') et des parties de référence d'étalonnage (3, 3') qui correspondent aux originaux respectifs et servent de référence au cours de la lecture des originaux correspondants ;
une tête d'analyse (5) destinée au balayage optique du support d'originaux afin de lire les originaux et les parties de référence d'étalonnage ;
un moyen d'éclairage pour éclairer les originaux et les parties de référence d'étalonnage ; et
des moyens photosensibles (6) pour recevoir des signaux d'intensité lumineuse issus des originaux et des parties de référence d'étalonnage ;
des moyens de mesure de position de la tête d'analyse (4, 15) destinés à mesurer la position de la tête d'analyse ;
des moyens de mémorisation (20) pour mémoriser les positions des parties de référence d'étalonnage ;
des moyens d'étalonnage (7, 9) pour étalonner la tête de lecture afin de lire un original en relation avec le signal de lecture obtenu sur les parties de référence d'étalonnage respectives et comprenant des moyens d'étalonnage des moyens photosensibles (6) en fonction du signal d'intensité lumineuse émis par les parties de référence d'étalonnage ; et
des moyens de comparaison (18) de la position mesurée de la tête d'analyse et des positions mémorisées des parties de référence d'étalonnage et, de commande des moyens d'étalonnage au moment de la coïncidence entre les positions mesurées et mémorisées.

2. Appareil selon la revendication 1, dans lequel les moyens photosensibles comprennent un tube photomultiplicateur.

3. Appareil selon la revendication 2, dans lequel le tube photomultiplicateur produit une tension de sortie correspondant au signal d'intensité lumineuse, et dans lequel le moyen d'étalonnage ajuste le niveau de la tension de sortie.

4. Appareil selon la revendication 1, dans lequel le moyen photosensible comprend une barette CCD.

5. Appareil selon la revendication 1, 2 ou 3, dans lequel l'original est transparent et le moyen d'éclairage éclaire l'original avec la lumière émise.

6. Appareil selon la revendication 1, 2 ou 3, dans lequel l'original ne transmet pas la lumière, et le moyen d'éclairage éclaire l'original pour obtenir une lumière réfléchie par celui-ci.

7. Appareil selon l'une quelconque des revendications précédentes, dans lequel le support d'originaux est cylindrique.

8. Appareil selon l'une quelconque des revendications précédentes, dans lequel le moyen de mesure de la position de la tête d'analyse comprend un codeur linéaire.

9. Procédé d'étalonnage d'un appareil de lecture et d'analyse d'image dans lequel un original supporté est analysé et lu, dans lequel :
plusieurs originaux peuvent être lus successivement de façon automatique par :
la mémorisation des positions de chacune parmi une pluralité de parties de référence d'étalonnage supportées par un support d'originaux, ce par quoi chacune sert de référence au cours de la lecture de l'original correspondant ;
le démarrage de l'analyse ;
la mesure de la position de la tête d'analyse ;
la comparaison de la position de la tête d'analyse mesurée avec les positions mémorisées des parties de référence d'étalonnage ;
au moment de la détection d'une coïncidence entre la position de la tête d'analyse et de la position mémorisée de la partie de référence d'étalonnage, la mesure d'un signal d'intensité lumineuse issu de la partie de référence d'étalonnage ;
l'étalonnage de la tête de lecture en fonction de ladite intensité lumineuse du signal obtenue sur la partie de référence d'étalonnage, qui comprend
l'étalonnage du moyen photosensible situé sur ladite tête d'analyse en fonction dudit signal d'intensité lumineuse ; et
la lecture de l'original correspondant par la tête d'analyse étalonnée.
